## Europäisches Patentamt
## European Patent Office
## Office européen des brevets

(19)

(11) Publication number:

**0 069 090**
**B1**

(12) # EUROPEAN PATENT SPECIFICATION

(45) Date of publication of patent specification: **21.05.86**

(51) Int. Cl.⁴: **B 60 K 26/02**

(21) Application number: **82830184.6**

(22) Date of filing: **22.06.82**

(54) **Apparatus for transforming the foot-operated accelerator control of a vehicle into a hand-operated control.**

(30) Priority: **24.06.81 IT 4874981**

(43) Date of publication of application:
**05.01.83 Bulletin 83/01**

(45) Publication of the grant of the patent:
**21.05.86 Bulletin 86/21**

(84) Designated Contracting States:
**AT BE CH DE FR LI LU NL**

(56) References cited:
**DE-A-2 333 546**
**FR-A-2 412 437**
**US-A-2 777 335**

(73) Proprietor: **Venturini, Giancarlo**
**Via Mattia Battistini 175**
**I-00167 Roma (IT)**

(72) Inventor: **Venturini, Giancarlo**
**Via Mattia Battistini 175**
**I-00167 Roma (IT)**

(74) Representative: **de Simone, Domenico**
**Ing. Barzanò & Zanardo S.p.A. Via Piemonte 26**
**I-00187 Roma (IT)**

Courier Press, Leamington Spa, England.

## Description

This invention relates to an apparatus for transforming the foot-operated control pedal of a vehicle accelerator into a hand-operated control.

Many apparatuses for transforming the traditionally foot-operated control of a vehicle, such as the accelerator and brakes, into hand-operated controls are known and available on the market, this transformation being unnecessary for the clutch due to the availability on the market of extremely good automatic clutch mechanisms and vehicles provided with automatic transmission.

Particularly, apparatuses for transforming the accelerator control into a manual control are well known in the art.

These known apparatus generally comprise a ring mounted either above or below the steering wheel for both rotating integrally therewith and axially moving in respect of the steering wheel rod when suitably manually pushed or pulled, the axial movement being transmitted to the accelerator pedal by connecting rods and levers.

These apparatuses operate satisfactorily but have a drawback in that they look unpleasant and are even uncomfortable when the vehicle provided therewith is used by a person who has no need for a hand-operated control, as it can easily happen.

Another already known apparatus is described in DE—A—2.333.546.

Said apparatus comprises, in particular, a circumferential steering wheel consisting of a stationary stiff portion or web support in a flexible sheath, fitted thereon and rotatable about the axis of said web. The sheath is connected to lever means, which, in their turn, are connected to pull means. At the other end, said pull means are connected to the accelerator pedal, so that when it moves along its own axis, the circular movement of said lever means is transmitted to said accelerator pedal.

It is an object of the present invention to improve said transmission providing a unit suited to coordinate movement from the lever means in order to allow levers to rotate together with the steering wheel, while the push means remain secured to the steering wheel rod.

It is an object of the invention to overcome the drawbacks of known apparatus providing an improved apparatus for hand-operating the control pedal of a vehicle in a safe, reliable, comfortable and simple manner, yet overcoming the drawbacks and disadvantages of the available apparatus.

The apparatus of the invention essentially comprises a steering wheel having a single spoke, a web consisting of an open ring made from a stiff metal rod, having its ends on the spoke a flexible outer sheath mounted on the web for torsionally rotating with respect thereto; two levers connected to the sheath and mounted on the web adjacent to the spoke for rotating with the sheath; a ring connected to the levers and supported for rotation above a support collar fitted around the steering wheel rod in order to axially move with respect thereto; and a system of rods and levers connecting the support collar to the accelerator pedal.

The above mentioned apparatus is operated by twisting the flexible sheath about the steering wheel web. This twisting action is easily performed by the hands gripping the steering wheel when driving.

The torsional action causes the accelerator pedal to be lowered through the two levers, ring, collar and connecting rods and levers.

The accelerator is released by releasing the twisting action on the flexible sheath which is returned to its rest position by both the accelerator pedal return spring and a further return spring acting on the connecting rods.

The invention will be now described in detail with reference to the annexed drawings, wherein:

Figure 1 is a perspective view of the apparatus of the invention;

Figure 2 is a side elevational view of the apparatus of Figure 1;

Figure 3 is a fragmentary exploded perspective view of some elements of the apparatus of Figure 1, with parts cut away or omitted for clearness;

Figure 4 is a fragmentary front view of the apparatus; and,

Figure 5 is a detailed view of the connection of the flexible sheath with one of the levers.

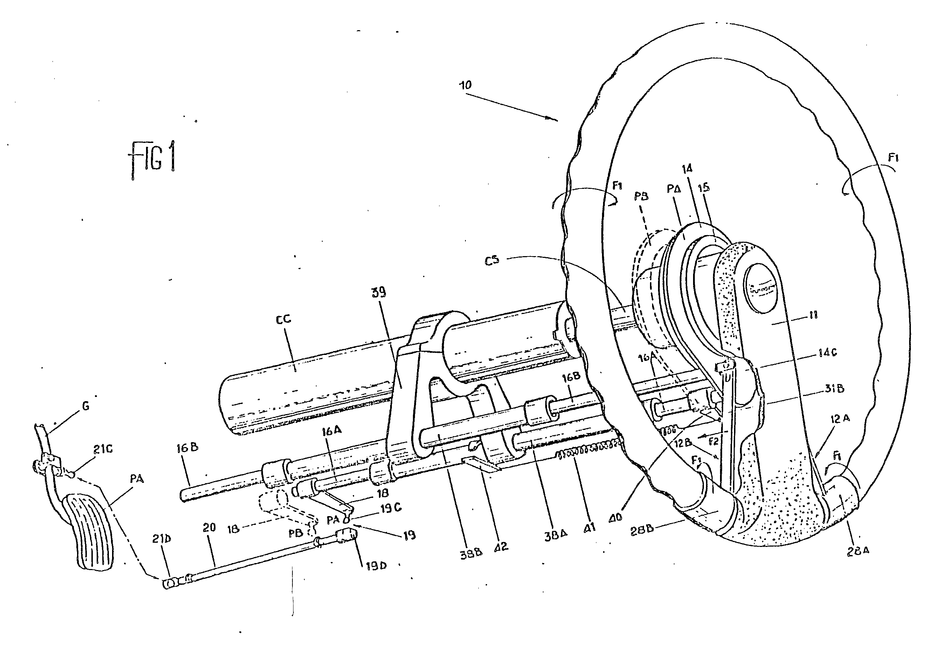

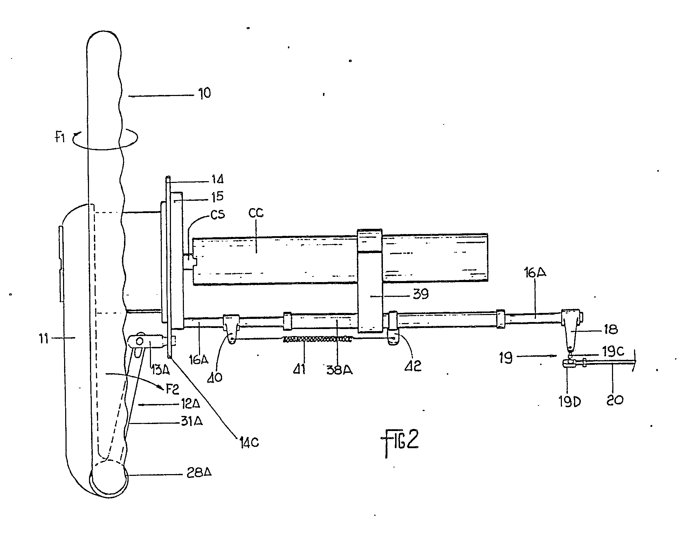

Particularly referring to Figs. 1 and 2, the apparatus of the invention essentially comprises a steering wheel 10 having a single spoke 11, two levers 12A, 12B, two links 13A, 13B, a thrust ring 14, a support collar 15, two push rods 16A, 16B, rod 16B only having a connecting tab 18 provided with a ball joint 19 which connects rod 16A to a push rod 20 connected, in turn, to the accelerator pedal PA by a further ball joint 21.

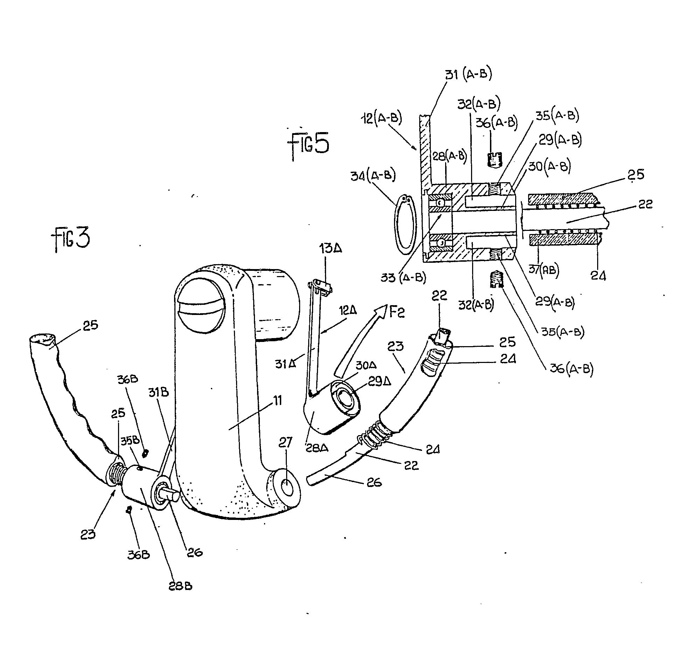

Steering wheel 10 (Figure 3) comprises a web 22 made of a circumferentially curved stiff rod of a convenient diameter and a flexible outer sheath 23 comprising a support 24 formed from a short-pitch coiled wire having a diameter larger than the diameter of web 22, and a coating 25 made from a flexible soft material integral with support 24.

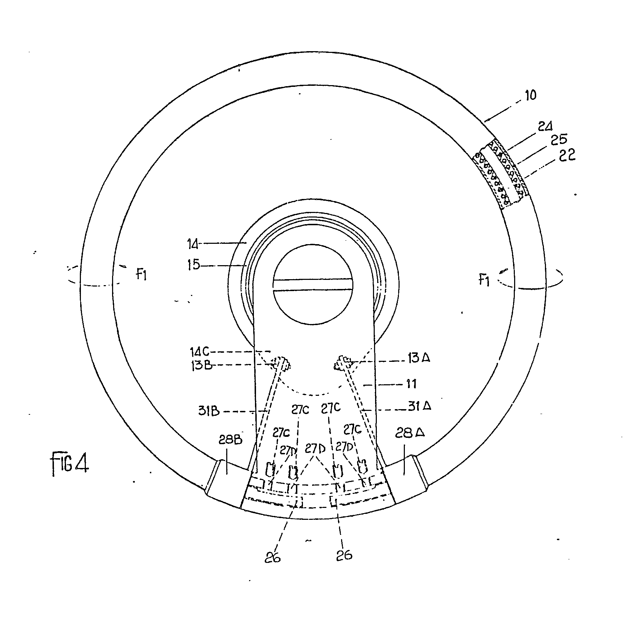

As clearly seen from Figure 3, web 22 has the shape of an almost complete circle having two prism-shaped ends 26 intended to be received into matching recesses 27 on spoke 11, only one of which is shown in Figure 3. Ends 26 are prevented both from rotating about the axis of web 22 and tangentially moving through screw 27C threadingly engaged with threaded openings 27D leading to recesses 27 (Figure 4).

Flexible sheath 23 and levers 12A, 12B are assembled on web 22 before fitting ends 26 into recesses 27 on spoke 11.

Each lever 12(A, B) consists of a bush portion 28(A, B) comprising an inner sleeve 29(A, B) and an outer sleeve 30(A, B) having a finger 31(A, B) integrally formed therewith, as more clearly seen from Figure 5. The annular space 32(A, B) defined by concentric sleeves 29(A, B) and 30(A, B) is dead and a ball bearing 33(A, B) is received within the inner bore of each bush 28(A, B) and blocked therein by an elastic circhip 34(A, B).

Furthermore, two diametrically opposed threaded through holes 35(A, B) are drilled in each outer sleeve 30(A, B), in which holes grub screw 36(A, B) can be engaged.

Levers 12(A, B) are assembled on web 22 (Figure 1 and 3) adjacent to spoke 11, ends 37(A, B) of flexible sheath 22 being received within outwardly annular spaces 32(A, B) wherein ends 37 are blocked by tightening screws 36(A, B) into threaded holes 35(A, B).

Finally, a link 13(A, B) is pivoted on the free end of each arm 31(A, B).

It will be evident from this construction that any torsion of flexible sheath 23 about web 22 will cause levers 12(A, B) to rotate about web 22, which rotation is facilitated by ball bearing 33(A, B).

As shown in Figures 1 and 2, each rod 16(A, B) is fitted into a corresponding sleeve 38(A, B) secured to jacket CC of the steering wheel rod CS by U-shaped bracket 39.

The upper ends of rods 16(A, B) are connected to support collar 15 which is supported thereby around the steering wheel rod CS and rod 16A carries a tab 40 to which one end of a spring 41 is anchored. The other end of spring 41 is anchored to a similar tab 42 integrally formed with sleeve 38A so that spring 41 exerts a traction therebetween.

As mentioned above, support collar 15 carries a thrust ring 14 comprising a protruding portion 14C to which links 13(A, B) are secured, which links are pivoted on the ends of fingers 31(A, B) of levers 12(A, B).

Furthermore, a connecting tab 18 is mounted on the free lower end of rod 16A.

At the end of tab 18 a ball 19C of a ball joint 19 is provided, the socket portion 19D of which forms the upper end of push rod 20.

The lower end of rod 20 is connected to accelerator pedal PA through a second ball joint 21, the socket portion 21 of which forms this lower end, while the ball portion 21C is secured to stem G of pedal PA.

The operation of the apparatus of the invention herein described and illustrated in the drawings will be evident from the foregoing.

As mentioned above, the torsion of sheath 23 about web 22 of steering wheel 10, according to arrows F1 which torsion is performed by the hands gripping the steering wheel when driving, causes levers 12(A, B) to rotate downwardly according to arrows F2. This rotation causes the unit comprising thrust ring 14 and support collar 15 to be lowered from position PA shown in full lines in Fig. 1 to position PB shown in dotted lines, thus causing pedal PA to be lowered through rods 16(A, B) and 20. Pedal PA thus causes the vehicle engine to be accelerated. The accelerator is released immediately by twisting sheath 23 in the opposite direction, which twisting action is helped by the bias of both the accelerator return spring and spring 41 acting between rod 16A and sliding sleeve 39A.

The unit comprising thrust ring 14 support collar 15 allows levers 12(A, B) to rotate together with the steering wheel rods 16(A, B) remain secured to the steering wheel rod.

It should be pointed out that rod 16B is intended only to balance the pushing action since the torsion of levers 12(A, B) is transmitted to accelerator pedal PA only through rod 16A.

## Claims

1. An apparatus for transferring the foot-operated accelerator control of a vehicle intended to be used by a disabled person into a hand-operated control operated by the hands gripping the steering wheel when driving, comprising a circumferential steering wheel (10) consisting of a stationary stiff portion or web (22) supporting a flexible portion or sheath (23) fitted thereon, which sheath (23) is adapted to rotate about the axis of said web (22); lever means (12A, 12B) connected to said sheath (23) in order to rotate therewith; and push means (16A, 16B) connected, at one end, to said lever means (12A, 12B) and, at the other end, to the accelerator pedal (PA), adapted to move along its own axis and to transmit the circular movement of said lever means (12A, 12B) to said accelerator pedal (PA), characterized in that, between said lever means (12A, 12B) and said push means (16A, 16B) is interposed a unit having a thrust ring (14) connected to said lever means (12A, 12B) and a support collar (15) connected to said push means (16A, 16B), said support collar (15) being movable with respect to axial movements but stationary with respect to torsional movements.

2. The apparatus according to claim 1, wherein said steering wheel comprises a single spoke which supports said stiff web made from a length of a metal rod having a round section.

3. The apparatus according to claim 2, wherein said flexible portion consists of a sheath comprising a flexible support formed a short-pitch coiled wire having a diameter larger than the diameter of said stiff web and a soft coating for said support which is gripped by the driver's hands.

4. The apparatus according to claim 3, wherein said lever means comprises two levers each having a bush portion fitted on said web at both sides of said spoke, to which one end of said flexible sheath is connected, and a finger portion connected to the rotating portion of said unit.

5. The apparatus according to claim 4, wherein said accelerator pedal push means, movable along its own axis comprises at least one elongated rod slidingly moving within a support sleeve secured to the steering wheel rod.

6. The apparatus according to claim 5, wherein a return spring causing said sliding rod to return to its original position is located between said rod and said sleeve.

## Patentansprüche

1. Vorrichtung zur Umwandlung des Fussbetaetigten Gashebels eines Kraftwagens, welcher dazu bestimmt ist, von einer Person gesteuert zu werden, welche ein oder beide Beine nicht gebrauchten kann, in eine handbetaetigten Gashebel, welcher mit den Haenden betaetigt werden kann, die das Lenkrad waehrend der Fahrt ergreifen, begreifend ein kreisfoermiges Lenkrad (10), welches aus einem festen und steifen Teil bzw. Seele (22) besteht, welches ein biegsames, darauf gezogenes Teil bzw. Mantel (23) traegt, welches dazu geeignet ist, um die Achse der erwaehnten Seele (22) zu drehen, sowie an diesem Mantel (23) verbundene Hebelmittel (12A, 12B), so dass diese mit ihm zusammendrehen, und Stossmittel (16A, 16B), welche an einem Ende mit diesen Hebelmitteln (12A, 12B) und am anderen Ende mit dem Fussgashebel (PA) verbunden sind, wobei sie dazu geeignet sind, sich nach der eigenen Achse zu bewegen und die Rotationsbewegung der erwaehnten Hebemittel (12A, 12B) auf das erwaehnte Fussgashebel (PA) zu uebertragen, dadurch gekennzeichnet, dass zwischen den erwaehnten Hebelmitteln (12A, 12B) und den erwaehnten Stossmitteln (16A, 16B) eine Einheit eingesetzt ist, welche ein mit den erwaehnten Hebelmitteln verbundenes, drehbares Teil (14) und ein axial bewegliches, jedoch gegenueber den Rotationsbewegungen festes, mit den erwaehnten Stossmitteln (16A, 16B) verbundenes Traegerteil (15) aufweist.

2. Vorrichtung nach Anspruch 2, wobei das erwaehnte Lenkrad eine einzige Speiche besitzt, welche die erwaehnte Steife Seele traegt, die aus einem Rundeisenabschnitt mit kreisfoermigem Querschnitt besitzt.

3. Vorrichtung nach Anspruch 2, wobei das erwaehnte biegsames Teil aus einem Mantel besteht, der einen biegsamen Träger begreift, welcher aus einem Draht besteht, der nach einer Schraubenlinie gewickelt ist, die eine geringe Steigung und einen groesseren Durchmesser aufweist als derjenige der erwähnten starren Seele, sowie eine weiche Umhuellung fuer diesen Traeger, die von den Haenden des Fahreres ergreift wird.

4. Vorrichtung nach Anspruch 3, wobei die erwaehnten Hebelmittel aus zwei Fingern bestehen, welche jeweils ein an der erwaehnten Seele auf den zwei Seiten der erwaehnten Speiche aufgesetztes Buchsenteil, woran eines der Enden des erwaehnten biegsamen Mantels verbunden ist, und ein am drehbaren Teil der erwaehnten Einheit verbundenes Armteil besitzen.

5. Vorrichtung nach Anspruch 4, wobei die erwaehnten Stossmittel des Fussgaspedals, welche dazu geeignet sind, translatorische Bewegungen nach der eigenen Achse durchzufuehren, aus mindestens einem verlaengerten Stab bestehen, der in eine am Lenkungsrohr befestigte Lagerbuchse gleitet.

6. Vorrichtung nach Anspruch 5, wobei zwischen dem erwaehnten verschiebbaren Stab und der erwaehnten Buchse eine Rueckzugfeder gespannt ist, die dazu neigt, den Stab in die urspruengliche Stellung zurueckzubringen.

## Revendications

1. Dispositif pour transformer la commande à pédale d'accélérateur d'un véhicule destiné à être conduit par une personne qui manque de la capacité d'usage d'un ou de tous les deux membres inférieurs en une commande manuelle actionnée par les mains qui tiennent le volant (4) de forme circulaire ayant une partie fixe et rigide (22) ou âme qui supporte une partie flexible (23) au gain enfilée sur l'âme, qui est capable de tourner autour de l'axe de ladite âme (22), moyens de levier (12, 12B) connectés avec ladite gaine (23) de façon à tourner ensemble et moyens de poussée (16A, 16B) connectés à un bout avec lesdits moyens à levier (12A, 12B) et à l'autre bout avec le pédale d'accélérateur (PA) et capables de se mouvoir par translation le long de leur axe et à transmettre le mouvement rotatoire des dites moyens de levier (12A, 12B) au dit pédale d'accélérateur (PA), charactérisé en ce que lesdits moyens de levier (12A, 12B) et lesdits moyens de poussée (16A, 16B) il est interposé un ensemble constitué par une partie tournante (14) connectée aux dits moyens de levier et une partie de support (15), mobile axialement mais fixe au regard des mouvements rotatoires, connectée aux dits moyens de poussée (16A, 16B).

2. Dispositif suivant la revendication 1, dans lequel ledit volant a un seul rai qui supporte ladite âme rigide, formée d'un tronçon d'un rond métallique de section circulaire.

3. Dispositif suivant la revendication 2, dans lequel ladite partie flexible est constitué par une gaine comprenante un support flexible formé par un fil enroulé à helice ayant un pas petit et un diamètre plus grand que ce de ladite âme rigide et un rêvetement souple pour ledit support, qui est empoigné par les mains du conducteur.

4. Dispositif suivant la revendication 3, dans lequel lesdits moyens de levier sont constitués par deux petits leviers chacun ayant une portion de boucle enfilée sur ladite âme de chaque côté du dit rai, auquel il est connecté un des bouts de ladite gaine, et une portion de bras connectée à la portion tournante du dit ensemble.

5. Dispositif selon la revendication 4, dans lequel lesdits moyens de poussée du pedale d'accélerateur capable de se mouvoir par translation le long de leur axe, sont constitués au moins par un axe allongé coulissant dans un manchon de support fixé au tuyau du volant.

6. Dispositif selon la revendication 5, dans lequel entre ledit axe coulissant et ledit manchon il est inséré un ressort de rappel pour reporter l'axe à sa position originale.

FIG.1

FIG 2

FIG5

31 (A-B)

32(A-B)

12(A-B)

36(A-B)

35(A-B)

28(A-B)

29(A-B)

34(A-B)

30(A-B)

25

22

24

33 (A-B)

37(AB)

32(A-B)

29(A-B)

35(A-B)

36 (A-B)

FIG3

13A

12A

F2

25

31A

30A

22

36B

29A

23

25

31B

25

11

28A

24

35B

27

24

23

22

26

36B

26

26

28B

FIG 4